(19) Europäisches Patentamt
European Patent Office
Office européen des brevets

(11) Publication number: **0 030 432**
**B1**

(12) **EUROPEAN PATENT SPECIFICATION**

(45) Date of publication of patent specification: **20.07.83**

(21) Application number: **80304282.9**

(22) Date of filing: **28.11.80**

(51) Int. Cl.[3]: **C 09 J 3/16**, C 08 J 5/12, B 29 H 9/10

(54) **Adhesive compositions and their use in bonding fluorinated rubbers to substrates.**

(30) Priority: **30.11.79 JP 156041/79**

(43) Date of publication of application:
**17.06.81 Bulletin 81/24**

(45) Publication of the grant of the patent:
**20.07.83 Bulletin 83/29**

(84) Designated Contracting States:
**DE FR GB IT**

(56) References cited:
**DE - A - 2 302 418**
**US - A - 3 532 653**

**Ullmann's Encyklopädie des technischen Chemie, Band 11, 1976, Seite 632**

(73) Proprietor: **Daikin Kogyo Co., Ltd.**
**Shinhankyu Building No 1-12-39, Umeda Kita-ku**
**Osaka-shi Osaka-fu (JP)**

(72) Inventor: **Tomoda, Masayasu**
**2-24-7, Nango Otsu**
**Shiga (JP)**

(74) Representative: **Perry, Robert Edward et al,**
**GILL JENNINGS & EVERY 53-64 Chancery Lane**
**London WC2A 1HN (GB)**

**EP 0 030 432 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Adhesive compositions and their use in bonding fluorinated rubbers to substrates

The present invention relates to adhesive compositions which can be used to bond fluorinated rubbers to substrates.

In comparison with ordinary rubbers, fluorinated rubbers, such as elastomeric copolymers of vinylidene fluoride with fluorine-containing ethylenically unsaturated monomers, have outstanding properties in regard to, for example, resistance to heat, oil solvents and chemicals. Fluorinated rubbers are therefore used in various industrial fields. Their use is particularly important as sealing materials, for example, as oil seals, valve steam seals and bearing seals. For such use, fluorinated rubbers are required to be firmly bonded, using an adhesive, onto the surface of a substrate. The adhesive should have good heat resistance, in order to maintain effectively the favourable characteristics of fluorinated rubbers, in addition to good adhesive properties.

Examples of conventional adhesives of the type described are the epoxy and silane adhesive agents "EPOTAC AD—45/PERCURE—HQ—IW" (manufactured by Nippon Pernox Co., Ltd), "SIXON 300/301" (manufactured by Dayton Chemical Co., Ltd), "CHEMLOCK 607" (manufactured by Hughson Chemical Corporation), "METALOCK S—2" and "METLOCK S—3" (manufactured by K.K. Toyo Kagaku Kenkyusho), "TYLOCK SB—06" and "TYLOCK SB—07" (manufactured by Tylock Co., Ltd) and "MONICAS" (manufactured by K.K. Yokohama Kobunshi Kenkyusho). However, these conventional adhesive agents often provide insufficient bonding strength.

An adhesive composition according to the present invention comprises a fluorine-containing epoxy compound and a silane compound having an organic functional group; the formulae of these compounds are given below.

The fluorine-containing epoxy compound has the general formula:

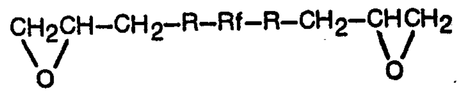

(I)

in which Rf is a fluoro($C_{1-8}$ alkylene) or fluorophenylene; R is a valence bond, $C_{1-2}$ alkylene optionally carrying one or more fluorine atoms, oxy($C_{1-2}$ alkylene) optionally carrying one or more fluorine atoms, or oxyphenylene optionally carrying one or more fluorine atoms or trifluoromethyl groups on the benzene ring. Specific examples are the following compounds:

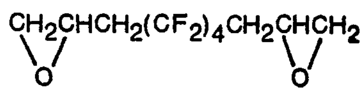

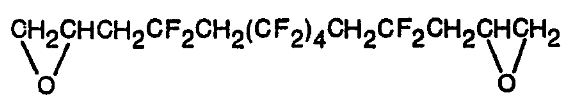

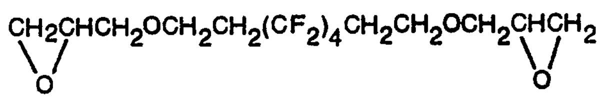

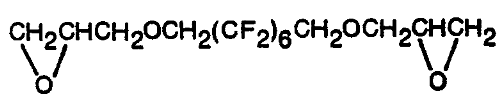

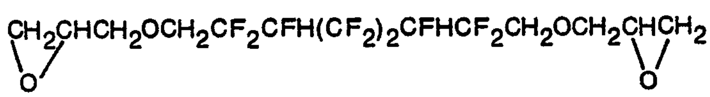

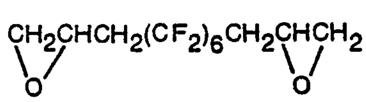

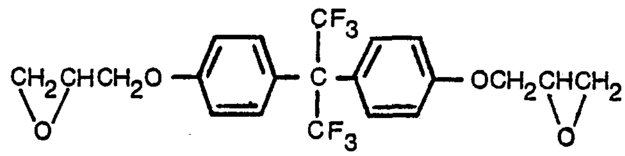

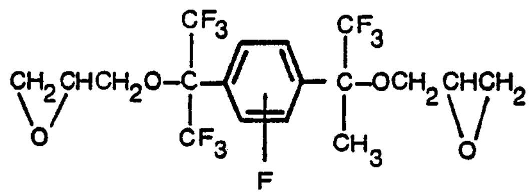

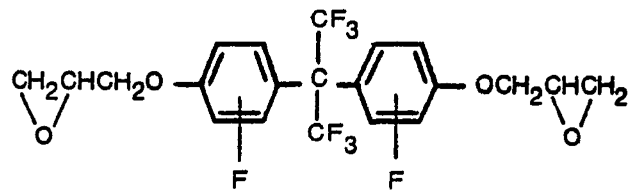

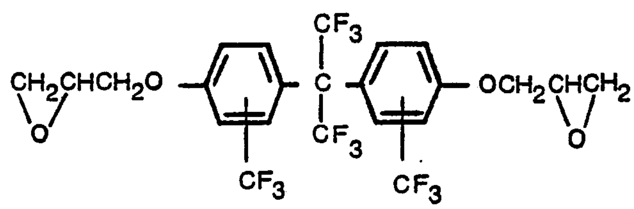

The silane compound, the second essential component of a composition of the invention, may be reactive with the fluorine-containing epoxy compound in the presence or absence of any other reactive aid such as a cross-linking agent or a curing agent. The silane compounds are covered by the general formula:

$$R^1Si(R^2)_{3-y}(R^3)_y \qquad (II)$$

wherein $R^1$ is $C_{1-10}$ alkyl or $C_{1-10}$ alkenyl and optionally carries one or more substituents independently selected from chlorine, amino, aminoalkyl, ureido, epoxyoxy, glycidyloxy, glycidoxy, epoxycyclohexyl, acryloyloxy, methacryloyloxy, mercapto and vinyl; $R^2$ and $R^3$ are independently selected from chlorine, hydroxyl, $C_{1-10}$ alkoxy, $C_{1-5}$ alkoxy ($C_{1-5}$ alkoxy), hydroxy ($C_{2-4}$ alkoxy) and $C_{1-5}$ acyloxy; and y is 0 or 1. In the formula II, $R^1$ is preferably vinyl or, often more preferably, a functional group-bearing alkyl group, of which examples are aminoalkyl such as 2-aminoethyl, 2-aminopropyl or 3-(2-aminoethylamino)propyl, ureidoalkyl such as 3-ureidopropyl, glycidoxyalkyl such as 3-glycidoxypropyl, epoxycyclohexylalkyl such as 2-(3,4-epoxycyclohexyl)ethyl, acryloyloxyalkyl such as 3-acryloyloxypropyl, methacryloyloxyalkyl such as 3-methacryloyloxypropyl, mercaptoalkyl such as 3-mercaptopropyl, chloroalkyl such as 2-chloroethyl or 3-chloropropyl, and vinylalkyl such as pent-4-enyl. $R_1$ is preferably aminoalkyl.

Specific examples of silane compounds of formula II are 3-aminopropyltriethoxysilane, 3-(2-aminoethylamino)propyltrimethoxysilane, 3-ureidopropyltriethoxysilane, 3-glycidoxypropyltriethoxysilane, 2-(3,4-epoxycyclohexyl)ethyltrimethylsilane, 3-methacryloyloxypropyltrimethoxysilane, 3-mercaptopropyltrimethoxysilane, 3-chloropropyltrimethoxysilane, vinyltris(2-methoxyethoxy)silane, vinyltriethoxysilane, vinyltrichlorosilane, vinyltriacetoxysilane, 3-[2-(2-aminoethylamino)ethylamino]-propyltrimethoxysilane, 3-(phenylamino)propyltrimethoxysilane, and

$$CH_3COOC_2H_4NHC_2H_4NHC_3H_6Si(OCH_3)_3,$$

as well as adducts such as $NH_2C_3H_6Si(OC_2H_5)_3/2CH_2=CH—COOH$ adduct, etc.

The weight proportion of the fluorine-containing epoxy compound and the silane compound in the adhesive composition of the invention is desirably from 95:5 to 30:70, though not limited thereto. When the amount of the fluorine-containing epoxy compound is less than the above lower limit, the bonding strength at the stage of primary vulcanization tends to be lowered.

The adhesive composition of the invention is generally used in the form of solution or suspension in an organic solvent such as methanol, ethanol, isopropanol, acetone, methyl ethyl ketone, benzene or toluene.

Additionally, the adhesive composition may comprise any conventional cross-linking or curing agent for epoxy resins. Any such cross-linking or curing agent may have anything from an extremely low molecular weight to a high molecular weight and a substituent such as —$NH_2$,

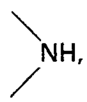

—COOH, —CO—O—CO—, —OH, —SH, —NCO or —CONH—. Of these cross-linking or curing agents, the most desirable are aliphatic and aromatic diamines, straight chain or branched aliphatic polyamines, alicyclic polyamines, modified amines (e.g. adducts of ethylene oxide with diethylene tetramine, etc.), secondary amines, tertiary amines, boron trifluoride-amine complexes, low polymerization degree compounds (e.g. melamine resin, urea resin, amide resin, urethane resin, phenol resin, sulfide resin), acids such as phthalic acid, trimellitic and chlorendic acids and their anhydrides, and imidazole compounds containing an epoxy functional group. The most preferred cross-linking or curing agents are amines and acid anhydrides.

The use of an adhesive composition of the present invention can ensure a firm bond and provide good adhesion, even at the primary vulcanization stage. Relative to known adhesives, therefore, the production of unsatisfactory bonded products can be much decreased. The novel adhesive compositions can have good heat resistance and can be applied to a wide variety of substrates.

Adhesive compositions of the invention can be quite stable at room temperature, and have long pot lives. They can thus be formulated, not only as two-component, but also as one-component, liquid adhesives.

Conventional two-component liquid adhesives often have a short pot life. They must therefore be used immediately after the components have been mixed. When an adhesive composition of the invention is formulated as a two-component system, this can have a relatively long pot life. Further, even after mixing, the pot life of the resulting one-component system can be as long as one month or more. Such compositions are therefore much easier to handle than conventional adhesives.

The bonding of a fluorinated rubber into a substrate, using an adhesive composition of the invention, may be carried out by various procedures. When, for instance, it is desired to bond a film or sheet of a vulcanized fluorinated rubber, the surfaces of the rubber and of the substrate to be bonded are degreased and cleaned with any suitable solvent, such as acetone, and the adhesive composition is then applied onto one or both of the degreased and cleaned surfaces by, for example, spraying, brushing or flow spreading. After drying and heating, the surfaces are brought into contact under pressure. When it is desired to bond an unvulcanized fluorinated rubber, a solution of the adhesive composition in any appropriate organic solvent, e.g. acetone, is applied onto the surface of a substrate which may previously have been degreased abraded and/or by washing with an acid or by blasting. After drying, the unvulcanized rubber composition, comprising a fluorinated rubber and, for example, a vulcanizing agent, an acid-acceptor and/or a filler, is placed on the said surface and vulcanized to cause bonding.

Vulcanization of a fluorinated rubber is generally effected at 140 to 200°C under a pressure of 20 to 100 $kg/cm^2$ for 10 to 180 minutes. If desired, secondary vulcanisation may be conducted at from 150 to 260°C for up to 30 hours.

It may be observed that, if an adhesive composition of the present invention is allowed to stand for a long period, e.g. 150 days, the bonding strength obtained when it is used to bond, say, a rubber sheet to a steel plate, may be less than when it was freshly prepared, or even after a period of, say, 55 days. However, this need not be a significant problem since secondary vulcanization can substantially achieve the higher bonding strength.

As stated above, adhesive compositions of the invention may be used to provide a fluorinated rubber bonded to a substrate. They may also be used to prepare cross-linkable or curable fluorinated rubber paint compositions, by dissolution, together with a fluorinated rubber, in a suitable solvent, e.g. a ketone.

The following Examples illustrate the invention. As controls, various Comparative Examples are also reported. All parts and percentages are by weight unless otherwise indicated.

## Example 1

(1) Preparation of fluorinated rubber:—

Vinylidene fluoride/hexafluoropropene copolymer (100 parts), bisphenol Af (2 parts), 8-benzyl-1,8-diazabicyclo[5.4.0]-7-undecenium chloride (0.4 part), MT carbon black (20 parts), magnesium oxide (3 parts) and calcium hydroxide (6 parts) were kneaded well by a roll, allowed to stand overnight and kneaded again. Then, the resulting mixture was extruded to make a rubber sheet having a thickness of about 2 mm.

(2) Preparation of adhesive composition:—

A fluorine-containing epoxy compound of the formula:

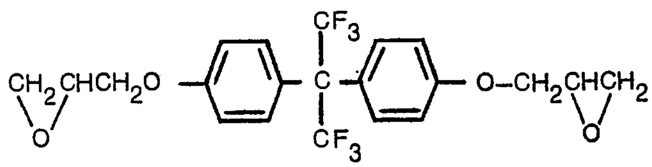

(hereinafter referred to as "AFEO") (6.7 parts), an aminosilane ["A—1120"; $H_2NCH_2CH_2NHCH_2CH_2CH_2Si(OCH_3)_3$; manufactured by Nihon Unicar Co.] (4.8 parts), acetone (16.5 parts), methanol (24 parts) and ethanol (48 parts) were mixed together to make an adhesive composition.

(3) Application of adhesive composition:—

A stainless steel plate (25 × 50 × 1.5 mm) was washed with cleanser and scrubbed, washed with water, treated with acetone and air-dried. The plate was dipped in a degreasing bath of 1,1,2-trichloro-1,2,2-trifluoroethane. It was taken out on each occasion of use and used as a substrate to be bonded.

The adhesive composition prepared in (2) was allowed to stand for one day and then applied onto the substrate treated in (3) according to the flow-spread process, followed by drying in air.

(4) Vulcanization bonding:—

A metal mold (173 × 127 × 7.9 mm; JIS (Japanese Industrial Standard) K 6301 8.3.1(2)) heated at 170°C was set with an aluminium plate so as to make possible the preparation of a vulcanized rubber having a finished thickness of about 2 mm.

About 20 mm wide portions at both ends of the substrate carrying the adhesive composition as in (3) were covered by masking tapes, the rubber sheet prepared in (1) was placed thereon and heating was effected in the metal mold at 170°C under 35 kg/cm²G for 15 minutes, whereby vulcanization bonding proceeded to give a rubber sheet-bonded substrate.

(5) Test on peeling strength:—

The rubber sheet-bonded substrate produced in (4) was taken out from the metal mold and pulled at a speed of 50 mm/min in accordance with JIS K 6301. The peeling strength was 4.8 kg/cm.

Separately, the rubber sheet-bonded substrate produced in (4) was subjected to secondary vulcanization at 230°C for 24 hours. The peeling strength of the resultant product was 3.7 kg/cm.

## Comparative Example 1

In the same manner as in Example 1 but using "CHEMLOCK 607" as an adhesive agent, the operations were carried out.

The peeling strength after vulcanization bonding at 170°C for 15 minutes was 1.5 kg/cm. By strongly pulling with the force of the fingers, the bonded parts were peeled off. The peeling strength after secondary vulcanization at 230°C for 24 hours was 3.3 kg/cm.

## Comparative Example 2

In the same manner as in Example 1 but using a 6% dilution of the aminosilane "A—1120' with methanol/ethanol (50:50 by volume) as an adhesive agent, the operations were carried out.

The peeling strength after vulcanization bonding at 170°C for 15 minutes was 0.8 kg/cm. The bonded parts were peeled off manually.

## Example 2

In the same manner as in Example 1 but using an aluminium plate (25 × 60 × 2.5 mm) as a substrate to be bonded and a rubber sheet having a thickness of about 2 mm, the operations were carried out.

The peeling strength after vulcanization bonding at 170°C for 15 minutes was 3.8 kg/cm.

## Comparative Example 3

In the same manner as in Example 1 but using "CHEMLOCK 607" as an adhesive agent and the substrate and the rubber sheet as employed in Example 2, the operations were carried out.

The peeling strength after vulcanization bonding at 170°C for 15 minutes was 0.98 kg/cm. The bonded parts were peeled off manually.

Example 3

In the same manner as in Example 2 but roughening the surface of the substrate by sandblasting, the operations were carried out.

The peeling strength after vulcanization bonding at 170°C for 15 minutes was 6.2 kg/cm.

Example 4

In the same manner as in Example 1 but using the adhesive composition after being allowed to stand at 25°C for 55 days from its preparation, the operations were carried out.

The peeling strength after vulcanization bonding at 170°C for 15 minutes was 4.5 kg/cm.

Example 5

In the same manner as in Example 1 but using the adhesive composition after being allowed to stand at 25°C for 55 days from its preparation and then diluted with methanol 2-fold, the operations were carried out.

The peeling strength after vulcanization bonding at 170°C for 15 minutes was 5.0 kg/cm.

Comparative Examples 4 and 5

The procedure of Example 5 was repeated twice except that "CHEMLOCK 607" and "MONICAS VT—200", respectively were used. The respective peeling strengths after vulcanization bonding at 170°C for 15 minutes were 1.0 kg/cm and manual force.

Example 6

Vinylidene fluoride/tetrafluoroethylene/hexafluoropropene copolymer (100 parts), MT carbon black (30 parts), lead dibasic phosphite (15 parts) and 4,4'-diaminodicyclohexylmethanecarbamate (1.7 parts) were kneaded well and extruded to make a 2.5 mm thick rubber sheet.

The rubber sheet was bonded on a steel plate having a zinc phosphate surface film ("BT—891"; manufactured by Japan Test Panel Co., Ltd; 20 x 60 mm) using AFEO (5 parts), the aminosilane A—1100 manufactured by Nippon Unicar Co. Ltd, of the formula

$$H_2N(CH_2)_3Si(OCH_2CH_3)_3$$

(5 parts), methanol (30 parts), ethanol (30 parts) and acetone (30 parts). The adhesive composition was used after having been allowed to stand for 1 day after its preparation. The resulting rubber sheet-substrate bond was subjected to a peeling strength test after vulcanisation bonding at 170°C for 15 minutes. The result was 6.0 kg/cm.

Example 7

The procedure of Example 6 was repeated except that the aminosilane was A—1120. The peeling strength was 7.5 kg/cm.

Comparative Examples 6 to 8

The procedure of Example 6 was repeated three times, with various changes. In Comparative Example 6, "EPICOAT 828" was used instead of AFEO. In Comparative Examples 7 and 8, the adhesive compositions were "MONICAS VT—200" and "CHEMLOCK 607" respectively. The respective peeling strengths were 4.5 kg/cm, 5,3 kg/cm and manual force.

Example 8

The adhesive composition of Example 1 was allowed to stand at ambient temperature for 150 days. Using the resultant composition, a 2.5 mm thick rubber sheet was bonded to a steel plate having a zinc phosphate surface film and subjected to primary vulcanization bonding at 180°C for 15 minutes and secondary vulcanization bonding at 230°C for 24 hours. The respective peeling strengths after each of the two stages were 1.6 and 4.9 kg/cm.

Examples 9 to 11

The procedure of Example 8 was repeated three times, using adhesive compositions each comprising 30 parts of each of methanol, ethanol and acetone and a total of 10 parts of AFEO and A—1120. The ratios of these two components were respectively 5:5, 7:3 and 8:2. After mixing the components of the adhesive compositions, they were allowed to stand for one day.

The respective peeling strengths after primary vulcanization were 5.9, 5.5 and 6.6 kg/cm. The respective peeling strengths after secondary vulcanization were 4.9, 5.0 and 5.2 kg/cm.

Examples 12 to 14

The procedure of Example 8 was repeated three times, using adhesive compositions each comprising 30 parts of each of methanol, ethanol and acetone and a total of 10 parts of Rf6EO (the dodecafluoro compound which is the sixth specific example of formula I given above) and A—1120.

The ratios of these two components were respectively 6:4, 7:3 and 8:2. After mixing the materials, they were allowed to stand for one day.

The respective peeling strengths after primary vulcanization were 5.5, 5.6 and 5.2 kg/cm. The respective peeling strengths after secondary vulcanization were 4.9, 5.2 and 5.1 kg/cm.

Comparative Examples 9 and 10

The procedure of Example 8 was repeated twice using MONICAS VT—200 and TYLOCK SB—06 as the adhesive compositions. In the former case, the respective peeling strenths after primary and secondary vulcanization were 5.5 and 3.6 kg/cm. In the latter case, peeling could be effected manually after both primary and secondary vulcanization.

The Trade Marks in the text are acknowledged by the applicants as such.

**Claims**

1. An adhesive composition which comprises a fluorine-containing epoxy compound and a silane compound having an organic functional group;

wherein the fluorine-containing epoxy compound has the formula

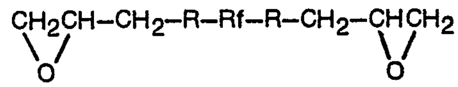

in which Rf is fluoro($C_{1-18}$ alkylene) or fluorophenylene; R is a valence bond, $C_{1-2}$ alkylene optionally carrying one or more fluorine atoms, oxy($C_{1-2}$ alkylene) optionally carrying one or more fluorine atoms, or oxyphenylene optionally carrying one or more fluorine atoms or trifluoromethyl groups on the benzene ring; and

wherein the silane compound has the formula

$$R^1Si(R^2)_{3-y}(R^3)_y$$

in which $R^1$ is $C_{1-10}$ alkyl or $C_{1-10}$ alkenyl and optionally carries one or more substituents independently selected from chlorine, amino, aminoalkyl, ureido, epoxyoxy, glycidoxy, epoxycyclohexyl, acryloyloxy, methacryloyloxy, mercapto and vinyl; $R^2$ and $R^3$ are independently selected from chlorine, hydroxyl, $C_{1-10}$ alkoxy, $C_{1-5}$ alkoxy($C_{1-5}$ alkoxy), hydroxy($C_{2-4}$ alkoxy) and $C_{1-5}$ acyloxy) and y is 0, 1 or 2.

2. An adhesive composition according to claim 1, wherein $R^1$ is aminoalkyl.

3. An adhesive composition according to claim 1 or claim 2, wherein the weight ratio of the fluorine-containing epoxy compound to the silane compound is from 95:5 to 30:70.

4. A fluorinated rubber bonded to a substrate with an adhesive, characterised in that the adhesive is a composition according to any preceding claim.

**Revendications**

1. Une composition adhésive qui comprend un composé de type époxy fluoré et un composé de type silane ayant un groupe fonctionnel organique;

dans laquelle le composé de type époxy fluoré a pour formule

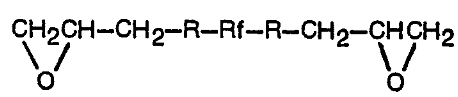

dans laquelle Rf est un fluoro(alkylène en $C_{1-18}$) ou un fluorophénylène; $R^1$ est une liaison valentielle, un alkylène en $C_{1-2}$ portant éventuellement un ou plusieurs atomes de fluor, un oxy(alkylène en $C_{1-2}$) portant éventuellement un ou plusieurs atomes de fluor, ou un oxyphénylène portant éventuellement un ou plusieurs atomes de fluor ou groupes trifluorométhyles sur le cycle benzène; et

où le composé de type silane a pour formule

$$R^1Si(R^2)_{3-y}(R^3)_y$$

dans laquelle $R^1$ est un alkyle en $C_{1-10}$ ou un alcényle en $C_{1-10}$ et porte éventuellement un ou plusieurs substituants choisis indépendamment parmi le chlore, un amino, un aminoalkyle, un uréido, un époxyoxy, un glycidoxy, un époxycyclohexyle, un acryloyloxy, un méthacryloyloxy, un mercapto et un

vinyle; $R^2$ et $R^3$ sont choisis indépendamment parmi le chlore, un hydroxy, un alcoxy en $C_{1-10}$, un alcoxy(en $C_{1-5}$)alcoxy en $C_{1-5}$, un hydroxyalcoxy en $C_{2-4}$ et un acyloxy en $C_{1-5}$; et y est 0, 1 ou 2.

2. Une composition adhésive selon la revendication 1, dans laquelle $R^1$ est un aminoalkyle.

3. Une composition adhésive selon la revendication 1 ou la revendication 2, dans laquelle le rapport pondéral du composé de type époxy fluoré au composé de type silane est de 95/5 à 30/70.

4. Un caoutchouc fluoré collé à un substrat avec un adhésif, caractérisé en ce que l'adhésif est une composition selon l'une quelconque des revendications précédentes.

**Patentansprüche**

1. Klebstoff-Zusammensetzung, enthaltend eine fluorhaltige Epoxy-Verbindung und eine Silan-Verbindung mit einer organischen funktionellen Gruppe, wobei die fluorhaltige Epoxy-Verbindung die Formel

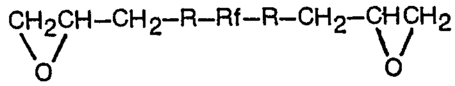

besitzt, in der Rf Fluoro($C_{1-18}$-Alkylen) oder Fluorophenylen ist, R eine Valenzbindung, $C_{1-2}$-Alkylen, des gegebenenfalls ein oder mehrere Fluor-Atome trägt, Oxy($C_{1-2}$-Alkylen), das gegebenenfalls ein oder mehrere Fluor-Atome trägt, oder Oxyphenylen, das gegebenenfalls ein oder mehrere Fluor-Atome oder Trifluoromethyl-Gruppen am Benzolring trägt, ist, und wobei die Silan-Verbindung die Formel

$$R^1Si(R^2)_{3-y}(R^3)_y$$

besitzt, in der $R^1$ $C_{1-10}$-Alkyl oder $C_{1-10}$-Alkenyl ist und gegebenenfalls einen oder mehrere Substituenten trägt, die unabhängig voneinander ausgewählt sind aus Chlor, Amino, Aminoalkyl, Ureido, Epoxyoxy, Glycidoxy, Ep oxycyclohexyl, Aryloyloxy, Methacryloyloxy, Mercapto und Vinyl, $R^2$ und $R^3$ unabhängig voneinander ausgewählt sind aus Chlor, Hydroxyl, $C_{1-10}$-Alkoxy, $C_{1-5}$-Alkoxy($C_{1-5}$-alkoxy), Hydroxy($C_{2-4}$-alkoxy) und $C_{1-5}$-Acyloxy, und y 0, 1 oder 2 ist.

2. Klebstoff-Zusammensetzung nach Anspruch 1, dadurch gekennzeichnet, daß $R^1$ Aminoalkyl ist.

3. Klebstoff-Zusammensetzung nach Anspruch 1 oder Anspruch 2, dadurch gekennzeichnet, daß das Gewichtsverhältnis der fluorhaltigen Epoxy-Verbindung zu der Silan-Verbindung von 95:5 bis zu 30:70 beträgt.

4. Mittels eines Klebstoffs an ein Substrat gebundener fluorierter Kautschuk, dadurch gekennzeichnet, daß der Klebstoff eine Zusammensetzung nach einem der vorhergehenden Ansprüche ist.